(19)

Europäisches
Patentamt
European
Patent Office
Office européen
des brevets

(11) **EP 4 770 143 A1**

(12) **EUROPEAN PATENT APPLICATION**
published in accordance with Art. 153(4) EPC

(43) Date of publication:
01.07.2026  Bulletin 2026/27

(21) Application number: 24858230.6

(22) Date of filing: 05.08.2024

(51) International Patent Classification (IPC):
*H04W 4/021* (2018.01)

(52) Cooperative Patent Classification (CPC):
Y02D 30/70

(86) International application number:
**PCT/CN2024/109777**

(87) International publication number:
**WO 2025/044687 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  25.08.2023  CN 202311075305

(71) Applicant: **Hanshow Technology Co., Ltd.
Jiaxing, Zhejiang 314031 (CN)**

(72) Inventors:
• **FU, Zhe
Jiaxing, Zhejiang 314031 (CN)**
• **LIANG, Min
Jiaxing, Zhejiang 314031 (CN)**
• **ZHUANG, Yitang
Jiaxing, Zhejiang 314031 (CN)**

(74) Representative: **IP TRUST SERVICES
Europole - Le Grenat
3, avenue Doyen Louis Weil
38000 Grenoble (FR)**

(54) **ASSISTED POSITIONING METHOD AND SYSTEM, COMPUTER DEVICE AND STORAGE MEDIUM**

(57)  Provided in the present disclosure are an assisted positioning method and system, a computer device and a storage medium. The method comprises: according to the strength value of a response signal received at the moment of a positioning anomaly, determining whether an autonomous mobile device is within a preset calibration range of any base station; when the autonomous mobile device is not within the preset calibration range of any base station, predicting the current running path to obtain a target predicted path; and the autonomous mobile device moving according to the target predicted path and, according to position information of a first target base station, performing assisted positioning for a positioning system in the autonomous mobile device. The present disclosure obtains the position information of different base stations by means of the real-time communication between the autonomous mobile device and the base stations in an electronic shelf label system, records and predicts the running path of the autonomous mobile device according to the position information of the different base stations, and promptly provides assisted positioning for the abnormal positioning system, thus improving the positioning stability of the autonomous mobile device.

```
transmitting a request signal at a specific transmit angle and        S101
receiving a response signal transmitted by a base station in
response to the request signal, by a directional antenna in the
shelf label communication module

                              ↓

when a positioning abnormality occurs in a positioning system          S102
of the autonomous mobile device, determining whether the
autonomous mobile device is within a preset calibration range
of any one base station based on an intensity value of a response
signal received at a moment of positioning abnormality

                              ↓

when the autonomous mobile device is not within the preset            S103
calibration range of any one base station, predicting a current
running path to obtain a target predicted path

                              ↓

when the autonomous mobile device moves according to the              S104
target predicted path and moves to a preset calibration range of a
first target base station, performing assisted positioning on the
positioning system of the autonomous mobile device based on
position information for the first target base station
```

**FIG. 1**

EP 4 770 143 A1

## Description

RELATED APPLICATION

The present application claims the priority of the Chinese invention patent application with the application number 202311075305.4, which was submitted on August 25, 2023, and all the contents referring to the disclosure of said patent application serve as a part of the present application.

TECHNICAL FIELD

The present disclosure relates to technical field of assisted positioning, and specifically relates to an assisted positioning method and system, computer device and storage medium.

BACKGROUND

With continuous development and progress of intelligent technologies, inspection robots with functions such as perceptual positioning, path planning, autonomous obstacle avoidance and image acquisition have been widely applied in various fields. Especially in large commodity supermarkets and warehouses, picking, replenishing and inventory counting may be carried out by inspection robots, which greatly improves management efficiency.

Currently, due to similar structures of commodity shelf aisles, environmental factors such as strong ground reflection or dim ambient light, or due to the influence of mileage calculation errors in a positioning system, inspection robots usually encounter a positioning failure problem when constructing a map or performing an inspection task, resulting in the inability of the inspection robots to navigate and walk normally. It is necessary to perform additional manual maintenance at irregular intervals.

It can be seen that the inspection robots in prior arts usually encounter a positioning failure problem, which increases the cost of manual maintenance and reduces stability and compatibility of the inspection robots.

SUMMARY

For deficiencies existing in the prior arts, an assisted positioning method provided in the present disclosure solves the problem in the prior arts that positioning failure usually occurs in the inspection robots. In the present disclosure, position information for different base stations is obtained by performing real-time communication between an autonomous mobile device and base stations in the electronic shelf label system, running paths of the autonomous mobile device are recorded and predicted based on the position information for different base stations, assisted positioning is provided timely for an abnormal positioning system, which improves positioning stability of the autonomous mobile device and compatibility of application scenarios.

In a first aspect, the present disclosure provides an assisted positioning method, applicable to assisted positioning of an autonomous mobile device, wherein the autonomous mobile device comprises a shelf label communication module that communicates with base stations in an electronic shelf label system, the assisted positioning method comprising: transmitting a request signal at a specific transmit angle and receiving a response signal transmitted by a base station in response to the request signal, by a directional antenna in the shelf label communication module; when a positioning abnormality occurs in a positioning system of the autonomous mobile device, determining whether the autonomous mobile device is within a preset calibration range of any one base station based on an intensity value of a response signal received at a moment of positioning abnormality; when the autonomous mobile device is not within the preset calibration range of any one base station, predicting a current running path to obtain a target predicted path; and when the autonomous mobile device moves according to the target predicted path and moves to a preset calibration range of a first target base station, performing assisted positioning on the positioning system of the autonomous mobile device based on position information for the first target base station.

In a second aspect, the present disclosure provides an assisted positioning method, applicable to assisted positioning of an autonomous mobile device, wherein the autonomous mobile device comprises a shelf label communication module that communicates with base stations in an electronic shelf label system, and an image acquisition component, the method comprising: transmitting a request signal at a specific transmit angle and receiving a response signal transmitted by a base station in response to the request signal, by a directional antenna in the shelf label communication module; when a positioning abnormality occurs in a positioning system of the autonomous mobile device, determining whether the autonomous mobile device is within a preset calibration range of any one base station based on an intensity value of a response signal received at a moment of positioning abnormality; when the autonomous mobile device is not within the preset calibration range of any one base station, predicting a current running path to obtain a target predicted path; obtaining an image matching dataset based on all shelf display images acquired by the autonomous mobile device on a movement path during a preset time period and on the target predicted path; and comparing a current shelf image acquired by the image acquisition component at the moment of positioning abnormality with the image matching dataset to obtain first target shelf information in the current shelf image, and performing assisted positioning on the positioning system of the autonomous mobile device based on position information in the first target shelf information.

Optionally, the method further comprises: when the positioning system of the autonomous mobile device performs positioning normally, the image acquisition component acquires shelf images at a preset shooting frequency and caches the shelf images and image acquisition times.

Optionally, if the first target shelf information in the current shelf image is not obtained, the method further comprises: obtaining target image acquisition time closest to the moment of positioning abnormality from cached image acquisition times, and obtaining a target shelf image based on the target image acquisition time; comparing the target shelf image with the image matching dataset to obtain second target shelf information in the target shelf image; and performing assisted positioning on the positioning system of the autonomous mobile device based on position information in the second target shelf information.

Optionally, if the first target shelf information in the current shelf image is not obtained, the method further comprises: when the autonomous mobile device moves according to the target predicted path and moves to a preset calibration range of a first target base station, performing assisted positioning on the positioning system of the autonomous mobile device based on position information for the first target base station.

Optionally, the method further comprises: when determining that the autonomous mobile device is within a preset calibration range of a second target base station based on the intensity value of the response signal received at the moment of positioning abnormality, performing assisted positioning on the positioning system of the autonomous mobile device based on position information for the second target base station.

Optionally, if the first target shelf information in the current shelf image is not obtained, the method further comprises: obtaining, by the autonomous mobile device, a third target base station closest to the autonomous mobile device based on magnitudes of intensity values of all response signals received after rotation of the autonomous mobile device; and performing assisted positioning on the positioning system of the autonomous mobile device based on position information for the third target base station.

Optionally, before the directional antenna in the shelf label communication module transmits the request signal at the specific transmit angle, the method further comprises: configuring an included angle for the directional antenna in the shelf label communication module relative to a horizontal direction based on a spacing distance between base stations, so that the directional antenna transmits the request signal at the specific transmit angle.

Optionally, the determination of whether the autonomous mobile device is within a preset calibration range of any one base station based on an intensity value of a response signal received at a moment of positioning abnormality comprises: when the intensity value of the response signal received at the moment of positioning abnormality is greater than or equal to a preset intensity threshold, determining that the autonomous mobile device is within the preset calibration range of the base station; and when the intensity value of the response signal received at the moment of positioning abnormality is less than the preset intensity threshold, determining that the autonomous mobile device is not within the preset calibration range of the base station.

Optionally, the prediction of a current running path to obtain a target predicted path comprises: generating at least two runnable paths according to a preset map; obtaining pose information for the autonomous mobile device at the moment of positioning abnormality based on a movement path during a preset time period; and screening the at least two runnable paths based on the pose information for the moment of positioning abnormality to obtain the target predicted path.

Optionally, before the prediction of a current running path to obtain a target predicted path, the method further comprises: when the positioning system of the autonomous mobile device performs positioning normally, determining whether the autonomous mobile device is within the preset calibration range of any one base station in real time based on the intensity value of the received response signal; when the autonomous mobile device is within the preset calibration range of any one base station, caching position information and cache time information for the any one base station; and forming a movement path of the autonomous mobile device based on each cache time information and corresponding base station position information.

Optionally, the prediction of a current running path to obtain a target predicted path comprises: generating at least two runnable paths according to a preset map; obtaining, by the autonomous mobile device, a first target base station closest to the autonomous mobile device based on magnitudes of intensity values of all response signals received after rotation of the autonomous mobile device; and screening the at least two runnable paths based on position information for the first target base station to obtain the target predicted path.

In a third aspect, the present disclosure provides an assisted positioning system, the assisted positioning system comprises an electronic shelf label system and an autonomous mobile device, wherein the autonomous mobile device comprises a shelf label communication module that communicates with base stations in the electronic shelf label system; the autonomous mobile device is configured to transmit a request signal at a specific transmit angle via a directional antenna in the shelf label communication module and receive a response signal transmitted by a base station in response to the request signal; when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality; when being not within the preset calibration range of any one base station, the autonomous mobile device is further configured to predict a current running path to obtain a target predicted path; the autonomous mobile device is further configured to perform assisted positioning on the positioning system of the autonomous mobile device based on position information for a first target base station when moving to a preset calibration range of the first target base station according to the target predicted path.

In a fourth aspect, the present disclosure provides an assisted positioning system, the assisted positioning system comprises an electronic shelf label system and an autonomous mobile device, wherein the autonomous mobile device comprises a shelf label communication module that communicates with base stations in the electronic shelf label system, and an image acquisition component; the autonomous mobile device is configured to transmit a request signal at a specific transmit angle via a directional antenna in the shelf label communication module and receive a response signal transmitted by a base station in response to the request signal; when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality; when the autonomous mobile device is not within the preset calibration range of any one base station, the autonomous mobile device is further configured to predict a current running path to obtain a target predicted path; the autonomous mobile device is further configured to obtain an image matching dataset based on a movement path during a preset time period before the moment of positioning abnormality and the target predicted path; the autonomous mobile device is further configured to compare a current shelf image acquired by the image acquisition component at the moment of positioning abnormality with the image matching dataset to obtain first target shelf information in the current shelf image, and perform assisted positioning on the positioning system of the autonomous mobile device based on position information in the first target shelf information.

In a fifth aspect, the present disclosure provides a computer device, comprising a memory, a processor and a computer program stored on the memory and capable of running on the processor, and the following steps are performed when the processor executes the computer program: transmitting a request signal at a specific transmit angle and receiving a response signal transmitted by a base station in response to the request signal, by a directional antenna in a shelf label communication module; when a positioning abnormality occurs in a positioning system of an autonomous mobile device, determining whether the autonomous mobile device is within a preset calibration range of any one base station based on an intensity value of a response signal received at a moment of positioning abnormality; when the autonomous mobile device is not within the preset calibration range of any one base station, predicting a current running path to obtain a target predicted path; and when the autonomous mobile device moves according to the target predicted path and moves to a preset calibration range of a first target base station, performing assisted positioning on the positioning system of the autonomous mobile device based on position information for the first target base station.

In a sixth aspect, the present disclosure provides a readable storage medium storing a computer program thereon, and the following steps are performed when the computer program is executed by a processor: transmitting a request signal at a specific transmit angle and receiving a response signal transmitted by a base station in response to the request signal, by a directional antenna in a shelf label communication module; when a positioning abnormality occurs in a positioning system of an autonomous mobile device, determining whether the autonomous mobile device is within a preset calibration range of any one base station based on an intensity value of a response signal received at a moment of positioning abnormality; when the autonomous mobile device is not within the preset calibration range of any one base station, predicting a current running path to obtain a target predicted path; and when the autonomous mobile device moves according to the target predicted path and moves to a preset calibration range of a first target base station, performing assisted positioning on the positioning system of the autonomous mobile device based on position information for the first target base station.

Compared with the prior arts, the present disclosure has the following advantageous effects.

In the present disclosure, by providing, in the autonomous mobile device, the shelf label communication module that may communicate with base stations in the electronic shelf label system, based on the intensity value of the response signal received at the moment of positioning abnormality, it is determined that the autonomous mobile device is beneath a certain base station, and assisted positioning is performed on an abnormal positioning system based on position information for this base station; when it is determined that the autonomous mobile device is not beneath any base station, a running path is predicted, and the autonomous mobile device is moved to a first target base station on the target predicted path, and finally, assisted positioning is performed on the abnormal positioning system based on position information for the first target base station. Therefore, in the present disclosure, position information for different base stations is obtained by performing real-time communication between the autonomous mobile device and base stations in the electronic shelf label system, running paths for the autonomous mobile device are recorded and predicted based on the position information for different base stations, and assisted positioning is provided timely for the abnormal positioning system, which improves positioning stability of the autonomous mobile device and compatibility of application scenarios.

BRIEF DESCRIPTION OF DRAWINGS

FIG. 1 is a schematic diagram of a flow of an assisted positioning method provided by the embodiments in the present disclosure;

FIG. 2 is a schematic diagram of a structure of an assisted positioning system provided by the embodiments in the present disclosure;

FIG. 3 is a schematic diagram of a scenario of a store map provided by the embodiments in the present disclosure;

FIG. 4 is a schematic diagram of interaction between base stations and an autonomous mobile device provided by the embodiments in the present disclosure;

FIG. 5 is a schematic diagram of prediction of a movement path provided by the embodiments in the present disclosure;

FIG. 6 is a schematic diagram of a flow of another assisted positioning method provided by the embodiments in the present disclosure;

FIG. 7 is a schematic diagram of a shelf display image provided by the embodiments in the present disclosure.

DESCRIPTION OF EMBODIMENTS

In order to make the purpose, technical solutions and advantages of the embodiments in the present application clearer, the technical solutions in the embodiments in the present application are described clearly and completely with reference to the drawings in the embodiments in the present application. Obviously, the described embodiments are some embodiments of the present application, not all embodiments. Based on the embodiments in the present application, all other embodiments obtained by those skilled in the art without paying inventive labor fall into the scope protected by the present application.

In a first aspect, the present disclosure provides an assisted positioning method, and specifically includes the following embodiments:

Embodiment 1

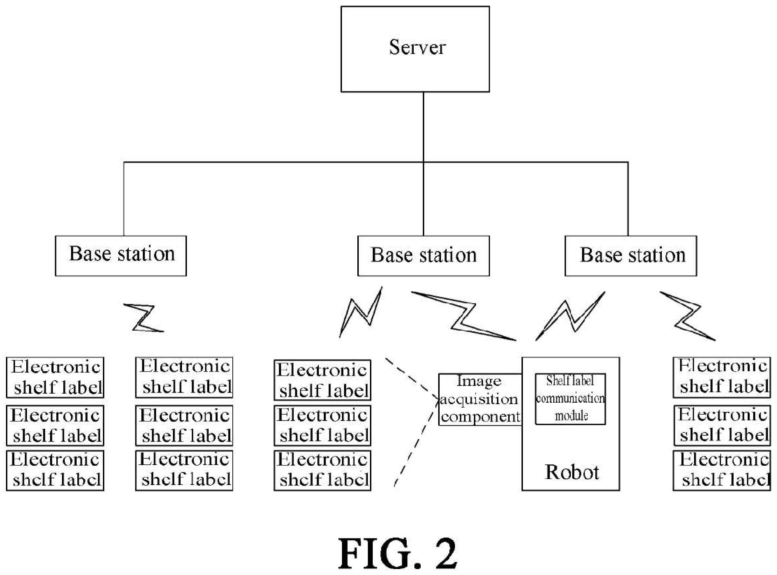

The assisted positioning method provided by this embodiment is applicable to assisted positioning of an autonomous mobile device, and the autonomous mobile device operates in application scenarios deployed with an electronic shelf label system. In the embodiments in the present disclosure, the autonomous mobile device refers to a device having a positioning function and an autonomous mobile capability in an environment, including but not limited to a robot, a transportation tool with an automatic guidance function, such as an automatic guided vehicle. According to the embodiments in the present disclosure, the autonomous mobile device may have a positioning system and is capable of moving autonomously along predetermined paths. In some situations, the autonomous mobile device may further select a path autonomously and move. As shown in FIG. 2, the electronic shelf label system comprises a server, a plurality of base stations and several electronic shelf labels, the autonomous mobile device comprises a shelf label communication module that communicates with base stations in the electronic shelf label system.

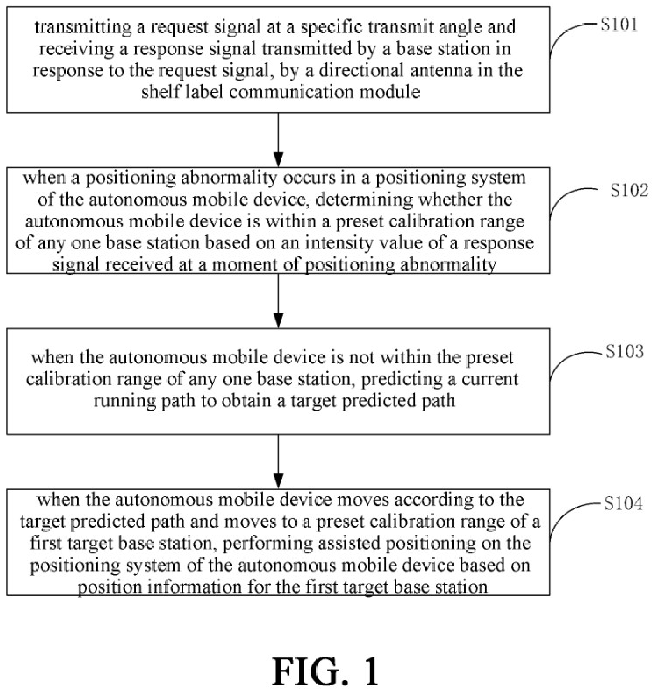

FIG. 1 is a schematic diagram of a flow of an assisted positioning method provided by the embodiments in the present disclosure. As shown in FIG. 1, the assisted positioning method specifically includes the following steps.

Step S101, transmitting a request signal at a specific transmit angle and receiving a response signal transmitted by a base station in response to the request signal, by a directional antenna in the shelf label communication module.

In this embodiment, before the directional antenna in the shelf label communication module transmits the request signal at the specific transmit angle, the method further comprises: configuring an included angle for the directional antenna in the shelf label communication module relative to a horizontal direction based on a spacing distance between base stations, so that the directional antenna transmits the request signal at the specific transmit angle.

What needs illustration is that in an electronic shelf label system environment of supermarkets, a shelf label communication module is installed at the top of a robot (i.e., autonomous mobile device), the shelf label communication module only retains a communication module for an electronic shelf label, which is used for communication with base stations and a server in the electronic shelf label system. The only difference between it and ordinary electronic shelf labels is that the transmission antenna is changed from an omnidirectional antenna to a narrow beam array antenna or helical antenna with directivity, and its half-power beam width is less than 45 degrees. A positioning system in the robot itself requires interaction between the deployed map services and the robot, that is, map services need to be deployed for the positioning system, and the robot may interact with the deployed map services, mainly used to determine an indoor truth value position for a base station in the electronic shelf label system; the positioning system in the robot itself includes but is not limited to positioning based on technologies such as WiFi, laser radar, two-dimensional codes, and UWB positioning technologies, and position distribution of base stations and electronic shelf labels in the electronic shelf label system is kept updated synchronously with the positioning system in the robot itself.

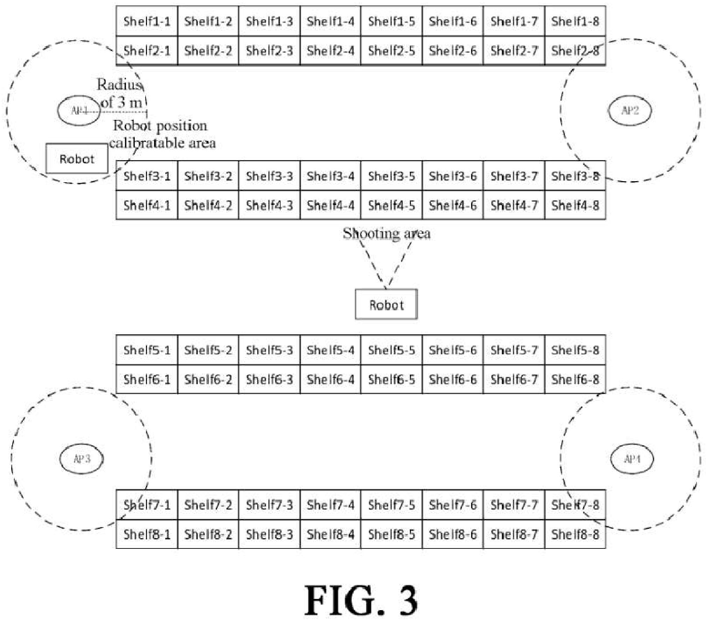

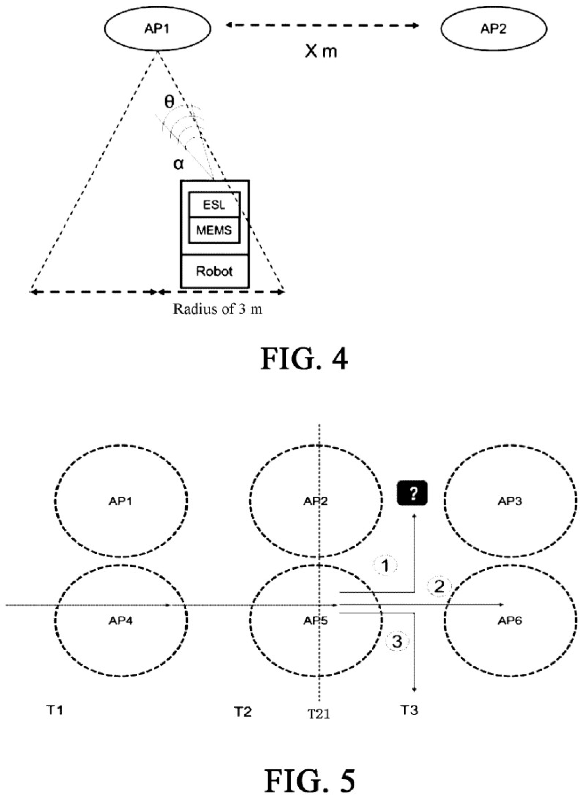

When the robot gets lost in an environment with lots of base stations, because the directional antenna has a function of reducing sidelobe signals, the robot may accurately determine its position in a map based on base station signals and its own positioning system position. When a spacing between base stations is relatively large, as shown in FIG. 3, since the directional antenna on the top of the robot is able to receive signals from specific base stations in specific regions, it may assist the robot in making pose judgment through intensities of signals received from different base stations. Specifically, in the example of FIG. 3, there are four base stations, i.e., AP1, AP2, AP3 and AP4, these base stations are located in different positions and may communicate with autonomous mobile devices (robots). There may be a representation in form of dashed circle centered on each base station. This circle represents a region where a robot may receive base station signals and perform calibration. For example, if a radius of the circle is 3 meters, only when the robot enters this 3-meter circle, it can receive a sufficiently enough signal to perform precise positioning. As shown in FIG. 4, the specific transmit angle $\alpha$ for the directional antenna in the shelf label communication module may be set based on a distance x between base stations, the larger a base station spacing x is, the smaller this included angle $\alpha$ will be. A specific setting formula is:

$$\alpha = \begin{cases} 25° \pm 5°, X \in [25, 30] \\ 45° \pm 5°, X \in [15, 25) \\ 60° \pm 5°, X \in (10, 15) \end{cases}$$

Where the specific transmit angle $\alpha$ is an included angle for the directional antenna relative to a horizontal direction. In the embodiments in the present disclosure, the half-power beam width $\theta$ for a module antenna is less than or equal to $45\pm3$ degrees. Through the coordinated setting of the specific transmit angle $\alpha$ and the half-power beam width $\theta$ for the module antenna, the directional antenna is able to effectively transmit and receive signals in a specific direction to assist the robot in accurate positioning.

Further, when a communication network of the electronic shelf label system is an asynchronous base station network, the shelf label communication module in the robot may transmit an uplink request signal every 1s or 2s to receive a response from a nearby base station, and select a base station with the largest signal by comparing intensities of base station response signals. When the communication network of the electronic shelf label system is a synchronous base station network, the shelf label communication module in the robot may continuously receive signals from base stations for a long time, making it easier to obtain a base station with the strongest signal and its position.

Step S102, when a positioning abnormality occurs in the positioning system of the autonomous mobile device, determining whether the autonomous mobile device is within a preset calibration range of any one base station based on an intensity value of a response signal received at a moment of positioning abnormality.

In this embodiment, the determination of whether the autonomous mobile device is within a preset calibration range of any one base station based on an intensity value of a response signal received at a moment of positioning abnormality comprises: when the intensity value of the response signal received at the moment of positioning abnormality is greater than or equal to a preset intensity threshold, the autonomous mobile device is determined to be within the preset calibration range of the base station; and when the intensity value of the response signal received at the moment of positioning abnormality is less than the preset intensity threshold, the autonomous mobile device is determined to be not within the preset calibration range of the base station.

What needs illustration is that positioning abnormality occurring in the positioning system of the autonomous mobile device may be manifested as loss of current position information. If the intensity value of the currently received response signal transmitted by the base station is greater than or equal to the preset intensity threshold, the autonomous mobile device is determined to be within the preset calibration range of this base station; otherwise, it is not within the preset calibration range of this base station.

The preset calibration range may be a range formed by taking the base station as a center and a radius being n meters. A specific value of the radius may be determined depending on a density of base stations and the precision of assisted positioning in an actual application scenario. FIG. 4 takes 3 meters as an example. The intensity of the response signal received by the robot when it moves to a range with a radius below 3 meters is obviously greater than that received beyond 3 meters. The preset intensity threshold is set according to the preset calibration range, or it may be said that the preset calibration range is divided according to the preset intensity threshold.

Step S103, when the autonomous mobile device is not within the preset calibration range of any one base station, predicting a current running path to obtain a target predicted path.

In this embodiment, when the autonomous mobile device is not within the preset calibration range of any one base station, that is, the autonomous mobile device is currently between two or more base stations and is not within the preset calibration range of any one base station, a current path that is about to run needs to be predicted. As shown in FIG. 5, if the robot experiences positioning abnormality at moment T3, paths ①, ② and ③ that are about to be runnable may be obtained according to a known map, then a target predicted path that the robot is about to run is obtained by perform prediction on these three paths.

In this embodiment, a specific implementation for predicting the current running path to obtain the target predicted path is:

When the positioning system of the autonomous mobile device performs positioning normally, determining whether the autonomous mobile device is within the preset calibration range of any one base station in real time based on the intensity value of the received response signal; when the autonomous mobile device is within the preset calibration range of any one base station, caching position information and cache time information for the any one base station; and forming a movement path of the autonomous mobile device based on each cached time information and corresponding base station position information; generating at least two runnable paths according to a preset map; obtaining pose information for the autonomous mobile device at the moment of positioning abnormality based on a movement path during a preset time period; and screening the at least two runnable paths based on the pose information for the moment of positioning abnormality to obtain the target predicted path.

What needs illustration is that when the positioning system of the autonomous mobile device performs positioning normally, the autonomous mobile device determines in real time whether it is within a preset calibration range of a certain base station based on an intensity value of a response signal transmitted by the base station, and when determining each time that it is within the preset calibration range of the certain base station, position information for the base station and a recording moment are recorded and intensity values of response signals transmitted by a plurality of base stations are simultaneously received, a movement path of the autonomous mobile device when the positioning system is normal is formed; at the moment of positioning abnormality, pose information for the autonomous mobile device at the moment of positioning abnormality is obtained based on a movement path during a preset time period, the pose information comprises an orientation of the autonomous mobile device, that is, an orientation of the directional antenna in the shelf label communication module. As shown in FIG. 5, the autonomous mobile device experiences positioning abnormality at moment T3, time periods T2 to T3 are taken as preset time periods, a movement path during the time periods T2 to T3 passes through the base station AP5, and the orientation of the directional antenna is determined based on intensity values of response signals transmitted by other multiple base stations and received at the recording moment when passing through AP5. For example, when the autonomous mobile device is within the preset calibration range of AP5, only stronger response signals transmitted by AP2, AP3 and AP5 are received, and response signals transmitted by AP6 are not received or only weaker response signals transmitted by AP6 are received, the position for the autonomous mobile device is determined to be oriented between AP2 and AP3, path ① is screened from the three runnable paths in FIG. 5 as the target predicted path.

In this embodiment, another specific implementation for predicting the current running path to obtain the target predicted path is:

generating at least two runnable paths according to a preset map; obtaining, by the autonomous mobile device, a first target base station closest to the autonomous mobile device based on magnitudes of intensity values of all response signals received after rotation of the autonomous mobile device; and screening the at least two runnable paths based on position information for the first target base station to obtain the target predicted path.

What needs illustration is that as shown in FIG. 5, the autonomous mobile device still experiences positioning abnormality at moment T3, still generates a plurality of paths that are currently about to be runnable according to the preset map; the autonomous mobile device rotates in place in a position where positioning abnormality occurs currently, while the autonomous mobile device rotating in place, the directional antenna transmits a request signal at a specific transmit angle and, at the same time, receives response signals transmitted by multiple nearby base stations in response to the request signal; then intensity values of all the received response signals are compared in order to take the base station corresponding to the currently received maximum intensity value as a first target base station, i.e., a base station currently closest to the autonomous mobile device, and take the path ② where AP6 is located as a current target predicted path if the current first target base station is AP6.

Step S104, when the autonomous mobile device moves according to the target predicted path and moves to a preset calibration range of a first target base station, performing assisted positioning on the positioning system of the autonomous mobile device based on position information for the first target base station.

What needs illustration is that after screening out the target predicted path, the autonomous mobile device moves according to the target predicted path and determines whether it is moving within the preset calibration range of the first target base station based on a magnitude of the intensity of the received response signal transmitted by the first target base station; when moving within the preset calibration range of the first target base station, the autonomous mobile device transmits the position information for the first target base station stored in it to the positioning system, enabling the positioning system to re-plan a running path based on the position information for the first target base station, achieving assisted positioning for the own positioning system of the autonomous mobile device.

In another embodiment of the present disclosure, when determining that the autonomous mobile device is within a preset calibration range of a second target base station based on the intensity value of the response signal received at the moment of positioning abnormality, performing assisted positioning on the positioning system of the autonomous mobile device based on position information for the second target base station.

What needs illustration is that when the positioning system of the autonomous mobile device experiences positioning abnormality, in the case that it is determined that the autonomous mobile device is within the preset calibration range of the second target base station based on the intensity value of the response signal received at the moment of positioning abnormality, the position information for the second target base station is directly transmitted to the positioning system to perform assisted positioning. As shown in FIG. 5, if the autonomous mobile device experiences positioning abnormality at moment T21, and the autonomous mobile device is beneath the AP5 base station at the moment T21, that is, within the preset calibration range of AP5, in this case, the position information for AP5 is directly transmitted to the positioning system to perform assisted positioning.

Compared with the prior arts, the present disclosure has the following advantageous effect.

In the present disclosure, by providing, in an autonomous mobile device, a shelf label communication module that may communicate with base stations in an electronic shelf label system, when it is determined that the autonomous mobile device is currently beneath a certain base station based on an intensity value of a response signal received at the moment of positioning abnormality, assisted positioning is performed on an abnormal positioning system based on position information for the base station; when it is determined that the autonomous mobile device is not beneath any base station, a running path is predicted, and the autonomous mobile device moves to a first target base station on a target predicted path, and assisted positioning is performed on the abnormal positioning system based on position information for the first target base station. Therefore, in the present disclosure, position information for different base stations is obtained by performing real-time communication between the autonomous mobile device and base stations in the electronic shelf label system, running paths for the autonomous mobile device are recorded and predicted based on the position information for different base stations, and assisted positioning is provided timely for the abnormal positioning system, which improves positioning stability of the autonomous mobile device and compatibility of application scenarios.

Embodiment 2

The assisted positioning method provided by this embodiment is applicable to assisted positioning of an autonomous mobile device, and the autonomous mobile device operates in application scenarios deployed with an electronic shelf label system. As shown in FIG. 2, the electronic shelf label system comprises a server, a plurality of base stations and several electronic shelf labels, the autonomous mobile device comprises a shelf label communication module that communicates with base stations in the electronic shelf label system, and an image acquisition component. The autonomous mobile device may comprise but be not limited to a robot.

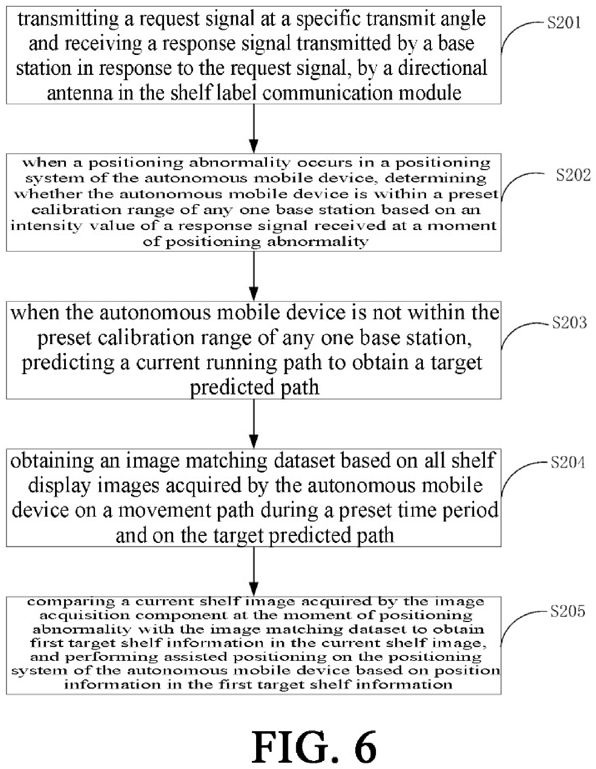

FIG. 6 is a schematic diagram of a flow of another assisted positioning method provided by the embodiments in the present disclosure. As shown in FIG. 1, the assisted positioning method specifically comprises the following steps:

Step S201, transmitting a request signal at a specific transmit angle and receiving a response signal transmitted by a base station in response to the request signal, by a directional antenna in the shelf label communication module.

Step S202, when a positioning abnormality occurs in a positioning system of the autonomous mobile device, determining whether the autonomous mobile device is within a preset calibration range of any one base station based on an intensity value of a response signal received at a moment of positioning abnormality.

Step S203, when the autonomous mobile device is not within the preset calibration range of any one base station, predicting a current running path to obtain a target predicted path.

Specific working process and principles of step S201 to step S203 in this embodiment are the same as those of step S101 to step S103 in Embodiment 1, and are not elaborated here.

Step S204, obtaining an image matching dataset based on all shelf display images acquired by the autonomous mobile device on a movement path during a preset time period and on the target predicted path.

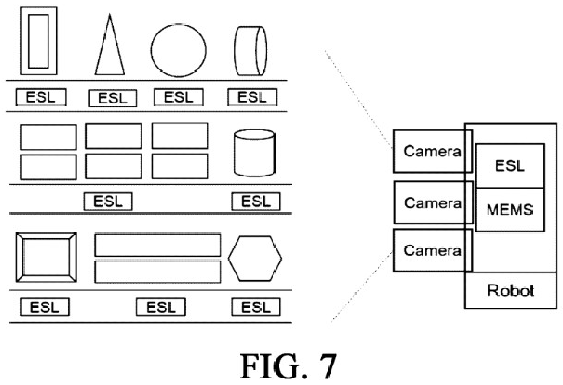

What needs illustration is that as shown in FIG. 5, when the autonomous mobile device experiences a positioning abnormality at moment T3, time periods T1 to T3 are taken as preset time periods before the moment of positioning abnormality, AP4 and AP5 that the autonomous mobile device passes serve as a movement path during the preset time periods. If path ② is taken as a target predicted path, the display images of all shelves on the path including base stations AP4 to AP6 serve as an image matching dataset. In supermarkets where the autonomous mobile device is used to perform inspection, a display image of each shelf has been collected by the autonomous mobile device or a mobile terminal and then is stored in a server, and based on dissimilarities for display information for each shelf, corresponding shelf and position information for the shelf are identified. Display information for a certain shelf is shown in FIG. 7. Moreover, according to different demands for assisted positioning precision, shelves with different widths may be provided, and the narrower the shelf width is, the relatively higher the assisted positioning precision is; otherwise, the positioning precision is relatively low. The shelf in this embodiment generally refers to a shelf with a width of about 1.2 meters.

In this embodiment, the purpose of the image matching dataset composed of all the shelf display images on the movement path during the preset time period and the target predicted path is to narrow down a range of subsequent image comparison, improve the efficiency of image comparison, thereby achieving a purpose of rapid assisted positioning. Since in a shopping mall, there may be tens of thousands or even more shelf display images, if one wants to determine which shelf the currently acquired shelf image corresponds to, it needs to compare this shelf image with tens of thousands or even more preset images, the computational amount is very large and the comparison efficiency is extremely low. In this embodiment, according to an image matching dataset obtained from movement paths of the autonomous mobile device in current and future time periods, an extremely large image comparison range is narrowed down to a specific small range, which greatly reduces the amount of image comparison, thereby improving an image comparison speed.

Step S205, comparing a current shelf image acquired by the image acquisition component at the moment of positioning abnormality with the image matching dataset to obtain first target shelf information in the current shelf image, and performing assisted positioning on the positioning system of the autonomous mobile device based on position information in the first target shelf information.

What needs illustration is that when the autonomous mobile device currently experiences a positioning abnormality, shelf images are acquired by means of positioning at a fixed point in place or rotating in place to obtain at least one current shelf image. And after comparing the at least one current shelf image with a previously obtained small-range shelf image matching dataset, first target shelf information in the at least one current shelf image is obtained. The first target shelf information comprises but is not limited to a shelf number, position information for a shelf, and a commodity number displayed on the shelf. Then, assisted positioning is performed on an abnormal positioning system based on shelf information in the first target shelf information.

Compared with the prior arts, the present disclosure has the following advantageous effect.

In the present disclosure, by providing, in an autonomous mobile device, a shelf label communication module that may communicate with base stations in an electronic shelf label system, when it is determined that the autonomous mobile device is currently beneath a certain base station based on an intensity value of a response signal received at the moment of positioning abnormality, assisted positioning is performed on an abnormal positioning system based on position information for the base station; when it is determined that the autonomous mobile device is not beneath any base station, a running path is predicted, so as to obtain all the shelf display images acquired by the autonomous mobile device on the movement path during the preset time period and the target predicted path; the current shelf image acquired by the image acquisition component at the moment of positioning abnormality is compared with all the shelf display images to obtain position information for a current shelf, and assisted positioning is performed on the abnormal positioning system based on the position information. Therefore, in the present disclosure, position information for different base stations is obtained by performing real-time communication between the autonomous mobile device and base stations in the electronic shelf label system, and running paths of the autonomous mobile device are recorded and predicted based on the position information for different base stations to lock a specific range of a corresponding shelf when the positioning abnormality occurs, then by comparing the currently acquired shelf images with images for shelves within a specific range, the position information for the current shelf is obtained, then assisted positioning is provided timely for the abnormal positioning system based on the position information for the current shelf, which improves positioning stability of the autonomous mobile device and compatibility of application scenarios.

In another embodiment of the present disclosure, when the positioning system of the autonomous mobile device performs positioning normally, the image acquisition component acquires shelf images at a preset shooting frequency and caches the shelf images and image acquisition times.

In another embodiment of the present disclosure, if the first target shelf information in the current shelf image is not obtained, the method further comprising: obtaining target image acquisition time closest to the moment of positioning abnormality from cached image acquisition times, and obtaining a target shelf image based on the target image acquisition time; comparing the target shelf image with the image matching dataset to obtain second target shelf information in the target shelf image; and performing assisted positioning on the positioning system of the autonomous mobile device based on position information in the second target shelf information.

What needs illustration is that due to problems, for example, a current shelf image acquired at the moment of positioning abnormality shows no displayed commodity or the commodity is missing, corresponding shelf information in the current shelf image cannot be recognized, that is, the first target shelf information in the current shelf image is not obtained. Since the autonomous mobile device will acquire and store shelf images at a specific shooting frequency during normal movement, and record corresponding image acquisition time when each image is acquired, but images which are acquired when positioning is normal are not compared, that is, in this case, it is not necessary to obtain corresponding shelf information in each acquired image; when there is a positioning abnormality and the first target shelf information in the current shelf image cannot be obtained, the latest image acquisition time, i.e., the last image acquisition before transmitting the moment of positioning abnormality, is found from all the stored images, a target shelf image corresponding to the latest image acquisition time is compared with the image matching dataset to obtain second target shelf information in the target shelf image, and assisted positioning is performed on the positioning system of the autonomous mobile device based on position information in the second target shelf information.

In a further embodiment of the present disclosure, if the first target shelf information in the current shelf image is not obtained, the method further comprises: when the autonomous mobile device moves according to the target predicted path and moves to a preset calibration range of a first target base station, performing assisted positioning on the positioning system of the autonomous mobile device based on position information for the first target base station.

What needs illustration is that when the first target shelf information in the current shelf image is not obtained, the position information for the first target base station is obtained in the manner provided by step S104 in Embodiment 1, and assisted positioning is performed on the positioning system of the autonomous mobile device based on the position information for the first target base station.

In a further embodiment of the present disclosure, if the first target shelf information in the current shelf image is not obtained, the method further comprises: obtaining, by the autonomous mobile device, a third target base station closest to the autonomous mobile device based on magnitudes of intensity values of all response signals received after rotation of the autonomous mobile device; and performing assisted positioning on the positioning system of the autonomous mobile device based on position information for the third target base station.

In this embodiment, when the first target shelf information in the current shelf image is not obtained, coarse-grained assisted position is performed for the positioning information based on position information for a base station currently closest to the autonomous mobile device. As shown in FIG. 5, when the autonomous mobile device experiences a positioning abnormality at moment T3, the position information for AP6 closest to the autonomous mobile device is directly taken as position information for the autonomous mobile device at moment T3.

In a second aspect, the present disclosure provides an assisted positioning system, the system comprises an electronic shelf label system and an autonomous mobile device, wherein the autonomous mobile device comprises a shelf label communication module that communicates with base stations in the electronic shelf label system; the autonomous mobile device is configured to transmit a request signal at a specific transmit angle via a directional antenna in the shelf label communication module and receive a response signal transmitted by a base station in response to the request signal; when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality; when being not within the preset calibration range of any one base station, the autonomous mobile device is further configured to predict a current running path to obtain a target predicted path; the autonomous mobile device is further configured to perform assisted positioning on the positioning system of the autonomous mobile device based on position information for a first target base station when moving to a preset calibration range of the first target base station according to the target predicted path.

Working principles of the assisted positioning system provided in this embodiment are the same as those of the above Embodiment 1, and is not elaborated here.

In a third aspect, the present disclosure provides another assisted positioning system, the system comprises an electronic shelf label system and an autonomous mobile device, wherein the autonomous mobile device comprises a shelf label communication module that communicates with base stations in the electronic shelf label system, and an image acquisition component; the autonomous mobile device is configured to transmit a request signal at a specific transmit angle via a directional antenna in the shelf label communication module and receive a response signal transmitted by a base station in response to the request signal; when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality; when the autonomous mobile device is not within the preset calibration range of any one base station, the autonomous mobile device is further configured to predict a current running path to obtain a target predicted path; the autonomous mobile device is further configured to obtain an image matching dataset based on a movement path during a preset time period before the moment of positioning abnormality and the target predicted path; the autonomous mobile device is further configured to compare a current shelf image acquired by the image acquisition component at the moment of positioning abnormality with the image matching dataset to obtain first target shelf information in the current shelf image, and perform assisted positioning on the positioning system of the autonomous mobile device based on position information in the first target shelf information.

Working principles of the assisted positioning system provided in this embodiment are the same as those of the above Embodiment 2, and is not elaborated here.

In a fourth aspect, the present disclosure provides a computer device, comprising a memory, a processor and a computer program that is stored on the memory and may run on the processor, the processor performs the method in the above Embodiment 1 or 2 when executing the computer program.

In a fifth aspect, the present disclosure provides a readable storage medium storing a computer program thereon, the computer program performs the method in the above Embodiment 1 or 2 when being executed by a processor.

Those skilled in the art may understand that implementation of all or part of the processes in the method of the above embodiments may be accomplished by instructing relevant hardware via a computer program; the program may be stored in a non-volatile computer readable storage medium, and when being executed, may comprise the processes in the embodiments of the above methods. Any reference to a memory, storage, a database or other medium used in each embodiment provided by the present application may include non-volatile and/or volatile memory. Non-volatile memory may comprise a read-only memory (ROM), a programmable ROM (PROM), an electrically programmable ROM (EPROM), an electrically erasable programmable ROM (EEPROM), or a flash memory. Volatile memory may comprise a random access memory (RAM) or an external cache memory. As an illustration rather than a limitation, the RAM is available in various forms, such as static RAM (SRAM), dynamic RAM (DRAM), synchronous DRAM (SDRAM), dual data rate SDRAM (DDRSDRAM), enhanced SDRAM (ESDRAM), synchlink DRAM (SLDRAM), rambus direct RAM (RDRAM), direct rambus dynamic RAM (DRDRAM), and rambus dynamic RAM (RDRAM), etc.

What needs illustration is that in the present disclosure, relational terms such as "first" and "second" are only used to distinguish one entity or operation from another entity or operation, and do not necessarily require or imply that there is any actual relationship or sequence between these entities or operations. And, the terms "comprise", "include" or any other variant thereof are intended to cover non-exclusive inclusion, so that a process, method, item or device that includes a series of elements not only includes those elements but also includes other elements not explicitly listed, or elements inherent to such process, method, item or device. In the absence of more limitations, an element defined by a statement "comprising one......" does not exclude existence of other identical elements in processes, methods, items or devices that include the element.

## Claims

1. An assisted positioning method, **characterized by** being applicable to assisted positioning of an autonomous mobile device, wherein the autonomous mobile device comprises a shelf label communication module that communicates with base stations in an electronic shelf label system, the method comprising:

   transmitting a request signal at a specific transmit angle and receiving a response signal transmitted by a base station in response to the request signal, by a directional antenna in the shelf label communication module;
   when a positioning abnormality occurs in a positioning system of the autonomous mobile device, determining whether the autonomous mobile device is within a preset calibration range of any one base station based on an intensity value of a response signal received at a moment of positioning abnormality;
   when the autonomous mobile device is not within the preset calibration range of any one base station, predicting a current running path to obtain a target predicted path; and
   when the autonomous mobile device moves according to the target predicted path and moves to a preset calibration range of a first target base station, performing assisted positioning on the positioning system of the autonomous mobile device based on position information for the first target base station.

2. An assisted positioning method, **characterized by** being applicable to assisted positioning of an autonomous mobile device, wherein the autonomous mobile device comprises a shelf label communication module that communicates with base stations in an electronic shelf label system, and an image acquisition component, the method comprising:

   transmitting a request signal at a specific transmit angle and receiving a response signal transmitted by a base station in response to the request signal, by a directional antenna in the shelf label communication module;
   when a positioning abnormality occurs in a positioning system of the autonomous mobile device, determining whether the autonomous mobile device is within a preset calibration range of any one base station based on an intensity value of a response signal received at a moment of positioning abnormality;
   when the autonomous mobile device is not within the preset calibration range of any one base station, predicting a current running path to obtain a target predicted path;

obtaining an image matching dataset based on all shelf display images acquired by the autonomous mobile device on a movement path during a preset time period and on the target predicted path; and

comparing a current shelf image acquired by the image acquisition component at the moment of positioning abnormality with the image matching dataset to obtain first target shelf information in the current shelf image, and performing assisted positioning on the positioning system of the autonomous mobile device based on position information in the first target shelf information.

3. The assisted positioning method according to claim 2, **characterized in that** the method further comprising:

when the positioning system of the autonomous mobile device performs positioning normally, the image acquisition component acquires shelf images at a preset shooting frequency and caches the shelf images and image acquisition times.

4. The assisted positioning method according to claim 3, **characterized in that** if the first target shelf information in the current shelf image is not obtained, the method further comprising:

obtaining target image acquisition time closest to the moment of positioning abnormality from cached image acquisition times, and obtaining a target shelf image based on the target image acquisition time;

comparing the target shelf image with the image matching dataset to obtain second target shelf information in the target shelf image; and

performing assisted positioning on the positioning system of the autonomous mobile device based on position information in the second target shelf information.

5. The assisted positioning method according to claim 2, **characterized in that** if the first target shelf information in the current shelf image is not obtained, the method further comprising:

when the autonomous mobile device moves according to the target predicted path and moves to a preset calibration range of a first target base station, performing assisted positioning on the positioning system of the autonomous mobile device based on position information for the first target base station.

6. The assisted positioning method according to claim 1 or 2, **characterized in that** the method further comprising:

when determining that the autonomous mobile device is within a preset calibration range of a second target base station based on the intensity value of the response signal received at the moment of positioning abnormality, performing assisted positioning on the positioning system of the autonomous mobile device based on position information for the second target base station.

7. The assisted positioning method according to claim 4, **characterized in that** if the first target shelf information in the current shelf image is not obtained, the method further comprising:

obtaining, by the autonomous mobile device, a third target base station closest to the autonomous mobile device based on magnitudes of intensity values of all response signals received after rotation of the autonomous mobile device; and

performing assisted positioning on the positioning system of the autonomous mobile device based on position information for the third target base station.

8. The assisted positioning method according to claim 1 or 2, **characterized in that** before the directional antenna in the shelf label communication module transmits the request signal at the specific transmit angle, the method further comprising:

configuring an included angle for the directional antenna in the shelf label communication module relative to a horizontal direction based on a spacing distance between base stations, so that the directional antenna transmits the request signal at the specific transmit angle.

9. The assisted positioning method according to claim 1 or 2, **characterized in that** the determination of whether the autonomous mobile device is within a preset calibration range of any one base station based on an intensity value of a response signal received at a moment of positioning abnormality comprising:

when the intensity value of the response signal received at the moment of positioning abnormality is greater than or equal to a preset intensity threshold, determining that the autonomous mobile device is within the preset calibration range of the base station; and

when the intensity value of the response signal received at the moment of positioning abnormality is less than the preset intensity threshold, determining that the autonomous mobile device is not within the preset calibration range of the base station.

10. The assisted positioning method according to claim 1 or 2, **characterized in that** the prediction of a current running path to obtain a target predicted path comprising:

> generating at least two runnable paths according to a preset map;
> obtaining pose information for the autonomous mobile device at the moment of positioning abnormality based on a movement path during a preset time period; and
> screening the at least two runnable paths based on the pose information for the moment of positioning abnormality to obtain the target predicted path.

11. The assisted positioning method according to claim 10, **characterized in that** before the prediction of a current running path to obtain a target predicted path, the method further comprising:

> when the positioning system of the autonomous mobile device performs positioning normally, determining whether the autonomous mobile device is within the preset calibration range of any one base station in real time based on the intensity value of the received response signal;
> when the autonomous mobile device is within the preset calibration range of any one base station, caching position information and cache time information for the any one base station; and
> forming a movement path of the autonomous mobile device based on each cache time information and corresponding base station position information.

12. The assisted positioning method according to claim 1 or 2, **characterized in that** the prediction of a current running path to obtain a target predicted path comprising:

> generating at least two runnable paths according to a preset map;
> obtaining, by the autonomous mobile device, a first target base station closest to the autonomous mobile device based on magnitudes of intensity values of all response signals received after rotation of the autonomous mobile device; and
> screening the at least two runnable paths based on position information for the first target base station to obtain the target predicted path.

13. An assisted positioning system, **characterized in that** the system comprising:

> an electronic shelf label system and an autonomous mobile device, wherein the autonomous mobile device comprises a shelf label communication module that communicates with base stations in the electronic shelf label system;
the autonomous mobile device is configured to transmit a request signal at a specific transmit angle via a directional antenna in the shelf label communication module and receive a response signal transmitted by a base station in response to the request signal;
when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality;
when being not within the preset calibration range of any one base station, the autonomous mobile device is further configured to predict a current running path to obtain a target predicted path;
the autonomous mobile device is further configured to perform assisted positioning on the positioning system of the autonomous mobile device based on position information for a first target base station when moving to a preset calibration range of the first target base station according to the target predicted path.

14. An assisted positioning system, **characterized in that** the system comprising:

> an electronic shelf label system and an autonomous mobile device, wherein the autonomous mobile device comprises a shelf label communication module that communicates with base stations in the electronic shelf label system, and an image acquisition component;
the autonomous mobile device is configured to transmit a request signal at a specific transmit angle via a directional antenna in the shelf label communication module and receive a response signal transmitted by a base station in response to the request signal;
when a positioning abnormality occurs in a positioning system of the autonomous mobile device, the autonomous mobile device is further configured to determine whether the autonomous mobile device is within a preset calibration range of any one base station based on an intensity value of a response signal received at a moment of positioning abnormality;
when the autonomous mobile device is not within the preset calibration range of any one base station, the autonomous mobile device is further configured to predict a current running path to obtain a target predicted path;
the autonomous mobile device is further configured to obtain an image matching dataset based on a movement path during a preset time period before the moment of positioning abnormality and the target predicted path;
the autonomous mobile device is further configured to compare a current shelf image acquired by the image acquisition component at the moment of positioning abnormality with the image matching dataset to obtain first target shelf information in the current shelf image, and perform assisted positioning on the positioning system of the autonomous mobile device based on position information in the first target shelf information.

15. A computer device, comprising a memory, a processor and a computer program stored on the memory and capable of running on the processor, **characterized in that** the processor performs steps of the method according to any one of claims 1 to 12 when executing the computer program.

16. A readable storage medium storing a computer program thereon, **characterized in that** the computer program performs steps of the method according to any one of claims 1 to 12 when being executed by a processor.

transmitting a request signal at a specific transmit angle and receiving a response signal transmitted by a base station in response to the request signal, by a directional antenna in the shelf label communication module ⎯ S101

when a positioning abnormality occurs in a positioning system of the autonomous mobile device, determining whether the autonomous mobile device is within a preset calibration range of any one base station based on an intensity value of a response signal received at a moment of positioning abnormality ⎯ S102

when the autonomous mobile device is not within the preset calibration range of any one base station, predicting a current running path to obtain a target predicted path ⎯ S103

when the autonomous mobile device moves according to the target predicted path and moves to a preset calibration range of a first target base station, performing assisted positioning on the positioning system of the autonomous mobile device based on position information for the first target base station ⎯ S104

# FIG. 1

**FIG. 2**

| Electronic shelf label | Electronic shelf label | Electronic shelf label |

| Electronic shelf label | Electronic shelf label | Electronic shelf label |

| Electronic shelf label | Electronic shelf label | Electronic shelf label |

Base station

Robot
- Image acquisition component
- Shelf label communication module

Base station

Base station

Server

| Electronic shelf label | Electronic shelf label | Electronic shelf label |

FIG. 3

FIG. 4

FIG. 5

EP 4 770 143 A1

```
┌──────────────────────────────────────────────┐
│ transmitting a request signal at a specific   │──── S201
│ transmit angle and receiving a response       │
│ signal transmitted by a base station in       │
│ response to the request signal, by a          │
│ directional antenna in the shelf label        │
│ communication module                          │
└──────────────────────────────────────────────┘
                      │
                      ▼
┌──────────────────────────────────────────────┐
│ when a positioning abnormality occurs in a    │──── S202
│ positioning system of the autonomous mobile   │
│ device, determining whether the autonomous    │
│ mobile device is within a preset calibration  │
│ range of any one base station based on an     │
│ intensity value of a response signal received │
│ at a moment of positioning abnormality        │
└──────────────────────────────────────────────┘
                      │
                      ▼
┌──────────────────────────────────────────────┐
│ when the autonomous mobile device is not      │──── S203
│ within the preset calibration range of any    │
│ one base station, predicting a current        │
│ running path to obtain a target predicted     │
│ path                                          │
└──────────────────────────────────────────────┘
                      │
                      ▼
┌──────────────────────────────────────────────┐
│ obtaining an image matching dataset based on  │──── S204
│ all shelf display images acquired by the      │
│ autonomous mobile device on a movement path   │
│ during a preset time period and on the target │
│ predicted path                                │
└──────────────────────────────────────────────┘
                      │
                      ▼
┌──────────────────────────────────────────────┐
│ comparing a current shelf image acquired by   │──── S205
│ the image acquisition component at the moment │
│ of positioning abnormality with the image     │
│ matching dataset to obtain first target shelf │
│ information in the current shelf image, and   │
│ performing assisted positioning on the        │
│ positioning system of the autonomous mobile   │
│ device based on position information in the   │
│ first target shelf information                │
└──────────────────────────────────────────────┘
```

# FIG. 6

19

FIG. 7

## INTERNATIONAL SEARCH REPORT

| International application No. |
| --- |
| **PCT/CN2024/109777** |

| A. | CLASSIFICATION OF SUBJECT MATTER |
| --- | --- |

H04W 4/021(2018.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

DWPI, CNTXT, ENTXTC, ENTXT: 定位, 位置, 路径, 路线, 轨迹, 预测, 预估, 未来, 价签, 基站, 标签, RFID, 机器人, 自主移动, 购物车, AMR, robot, route, tag, position, locate, cart, guide, path, way, forecast, predict

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117714984 A (HANSHOW TECHNOLOGY CO., LTD.) 15 March 2024 (2024-03-15) claims 1-16 | 1-16 |
| A | CN 114222365 A (HANGZHOU HIKVISION DIGITAL TECHNOLOGY CO., LTD.) 22 March 2022 (2022-03-22) description, paragraphs [0054]-[0077] | 1-16 |
| A | CN 116229657 A (GUANGDONG ZHIHUI XINPING TECHNOLOGY CO., LTD.) 06 June 2023 (2023-06-06) entire document | 1-16 |
| A | CN 116625391 A (SHANGHAI HANSHI INFORMATION TECHNOLOGY CO., LTD.) 22 August 2023 (2023-08-22) entire document | 1-16 |
| A | WO 2021246963 A1 (NGEE ANN POLYTECHNIC) 09 December 2021 (2021-12-09) entire document | 1-16 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 October 2024** | **22 October 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/109777**

| Patent document cited in search report | | | Publication date (day/month/year) | Patent family member(s) | Publication date (day/month/year) |
|---|---|---|---|---|---|
| CN | 117714984 | A | 15 March 2024 | None | |
| CN | 114222365 | A | 22 March 2022 | None | |
| CN | 116229657 | A | 06 June 2023 | None | |
| CN | 116625391 | A | 22 August 2023 | None | |
| WO | 2021246963 | A1 | 09 December 2021 | None | |

Form PCT/ISA/210 (patent family annex) (July 2022)

## REFERENCES CITED IN THE DESCRIPTION

**Patent documents cited in the description**

• CN 202311075305